(19) **Europäisches Patentamt**
**European Patent Office**
**Office européen des brevets**

(11) **EP 4 674 878 A1**

(12) **EUROPEAN PATENT APPLICATION**
published in accordance with Art. 153(4) EPC

(43) Date of publication:
**07.01.2026 Bulletin 2026/02**

(21) Application number: **24763544.4**

(22) Date of filing: **07.02.2024**

(51) International Patent Classification (IPC):
$C08F\ 293/00^{(2006.01)}$    $C08F\ 8/04^{(2006.01)}$
$C08L\ 23/08^{(2025.01)}$    $C08L\ 23/10^{(2006.01)}$
$C08L\ 53/02^{(2006.01)}$

(52) Cooperative Patent Classification (CPC):
**C08F 8/04; C08F 293/00; C08L 23/08; C08L 23/10;
C08L 53/02**

(86) International application number:
**PCT/JP2024/004029**

(87) International publication number:
**WO 2024/181060 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.03.2023 JP 2023031542**

(71) Applicant: **Asahi Kasei Kabushiki Kaisha
Tokyo 1000006 (JP)**

(72) Inventors:
- **ICHINO, Hiroyuki
  Tokyo 100-0006 (JP)**
- **SHIBUYA, Kenta
  Tokyo 100-0006 (JP)**
- **NAKAGAWA, Atsushi
  Tokyo 100-0006 (JP)**
- **KAMIMURA, Satoshi
  Tokyo 100-0006 (JP)**

(74) Representative: **Strehl & Partner mbB
Maximilianstrasse 54
80538 München (DE)**

(54) **BLOCK COPOLYMER AND COMPOSITION**

(57) A block copolymer (I) including: a polymer block A including a vinyl aromatic monomer unit as a main component and a polymer block B including a conjugated diene monomer unit as a main component, wherein the content of the polymer block A is 3 to 40 mass%, the vinyl bond content of the polymer block B before hydrogenation is 35 to 55 mol%, the degree of hydrogenation of the conjugated diene monomer unit contained in the polymer block B is 30 to 90 mol%, and the block copolymer (I) has a weight average molecular weight of 150,000 to 600,000.

**EP 4 674 878 A1**

## Description

### Technical Field

The present invention relates to a block copolymer and a composition.

### Background Art

Block copolymers composed of a vinyl aromatic compound and a conjugated diene compound exhibit elasticity comparable to that of natural or synthetic rubber at room temperature and molding processability similar to that of thermoplastic resins at high temperatures. Additionally, their excellent weatherability and heat resistance make them widely used as resin modifiers in applications such as automotive parts, tire components, medical molded articles, asphalt modifiers, molded articles such as footwear and food containers, packaging materials, viscous adhesive sheets, and components for home appliances and industrial parts.

Automotive airbag systems, as one of the aforementioned automotive components, are designed to protect drivers and passengers during collisions involving cars or other vehicles. They consist of an impact sensor and an airbag module. The airbag module is installed in components such as the steering wheel, the instrument panel in front of the passenger seat, the driver and passenger seats, and the front and side pillars. Regarding the airbag cover in the aforementioned airbag module, various proposals have been made concerning its structure and material to ensure that it ruptures as designed during airbag deployment.

For example, a styrene/butadiene/styrene block copolymer, which is a type of styrene/conjugated diene block copolymers, a propylene resin, and an ethylene/$\alpha$-olefin copolymer have been proposed as a thermoplastic elastomer constituting airbag cover materials using a thermoplastic elastomer composition having excellent low temperature impact resistance and heat resistance.

### List of Prior Art Documents

### Patent Document

Patent Document 1: Japanese Patent Laid-Open No. 2022-109650

### Summary of Invention

### Problems to be Solved by Invention

In recent years, while airbags have become larger to enhance safety, airbag modules are required to be more compact for aesthetic reasons. As a result, the relative force exerted on airbag covers during airbag deployment is increasing, requiring airbag cover materials with enhanced impact resistance at low temperatures. The thermoplastic elastomer composition disclosed in Patent Document 1 comprises a propylene block copolymer, an ethylene polymer including a polymer block composed of ethylene and an ethylene/$\alpha$-olefin copolymer block, and a partially hydrogenated product of a styrene/conjugated diene block copolymer. Patent Document 1 discloses that this thermoplastic elastomer composition has excellent low temperature impact resistance at -45°C and is suitable as a material for the airbag cover of airbag system.

However, the thermoplastic elastomer composition disclosed in Patent Document 1 exhibits limited impact resistance at extremely low temperatures, such as around -70°C, leaving room for improvement.

Accordingly, an object of the present invention is to provide a composition that exhibits sufficient elongation at break and rigidity for practical use and excellent impact resistance at extremely low temperatures and low gloss as a material for airbag covers, and a block copolymer used for the composition.

### Means for Solving Problems

The present inventors have conducted intensive studies to solve the above problem, and have found that the conventional problem described above can be solved by a composition comprising a block copolymer with a specific structure, and have completed the present invention.

That is, the present invention is as follows.

[1] A block copolymer (I) comprising: a polymer block A comprising a vinyl aromatic monomer unit as a main component and a polymer block B comprising a conjugated diene monomer unit as a main component, wherein

a content of the polymer block A is 3 to 40 mass%,

a vinyl bond content of the polymer block B before hydrogenation is 35 to 55 mol%,

a degree of hydrogenation of the conjugated diene monomer unit contained in the polymer block B is 30 to 90 mol%, and

the block copolymer (I) has a weight average molecular weight of 150,000 to 600,000.

[2] The block copolymer (I) according to [1], wherein the degree of hydrogenation of the conjugated diene monomer unit contained in the polymer block B is 30 to 77 mol%.

[3] The block copolymer (I) according to [1] or [2], wherein the block copolymer (I) has a melt flow rate of less than 0.1 g/10 min as measured under conditions of a measurement temperature of 230°C and a measurement load of 2.16 kg in accordance with ISO 1133.

[4] The block copolymer (I) according to any one of [1] to [3], wherein the block copolymer (I) is a hydrogenated product of a coupled polymer represented by the following formula (1) and having a coupling ratio of 80% or more:

$$(A\text{-}B)_n\text{-}X \qquad (1)$$

wherein A is a polymer block A comprising a vinyl aromatic monomer unit as a main component, B is a polymer block B comprising a conjugated diene monomer unit as a main component, n is an integer of 1 or more, and X is a residue of a coupling agent or a residue of a polymerization initiator.

[5] The block copolymer (I) according to any one of [1] to [4], wherein the block copolymer (I) is selected from the group consisting of crumb, flake and powder.

[6] A composition for an airbag cover comprising:

a component (I): the block copolymer (I) according to any one of [1] to [5] in an amount of 1 to 58 parts by mass,

a component (II): an ethylene copolymer in an amount of 11 to 68 parts by mass, and

a component (III): a propylene copolymer in an amount of 100 parts by mass.

[7] An airbag cover comprising the composition according to [6].

**Advantages of Invention**

According to the present invention, a composition that exhibits good elongation at break and rigidity for practical use and excellent impact resistance at extremely low temperatures and low gloss, and a block copolymer used for the composition are obtained.

**Mode for Carrying Out Invention**

The embodiments for carrying out the present invention (hereinafter referred to as "the present embodiment") will be described in detail below.
The following embodiments are provided to illustrate the present invention, and the present invention is not limited thereto. The present invention may be carried out with appropriate modification within the scope of the invention.

{Block copolymer}

Hereinafter, the block copolymer of the present embodiment will be described in detail.
The block copolymer (I) of the present embodiment comprises a polymer block A comprising a vinyl aromatic monomer unit as a main component and a polymer block B comprising a conjugated diene monomer unit as a main component, wherein the content of the polymer block A is 3 to 40 mass%, the vinyl bond content of the polymer block B before hydrogenation is 35 to 55 mol%, the degree of hydrogenation of the conjugated diene monomer unit contained in the polymer block B is 30 to 90 mol%, and the block copolymer (I) has a weight average molecular weight of 150,000 to 600,000.

In the present description, the phrase "comprising as a main component" with respect to the monomer unit constituting a polymer block, means that the intended polymer block contains 80 mass% or more and 100 mass% or less, and preferably 90 mass% or more and 100 mass% or less of the intended monomer unit.

The block copolymer (I) of the present embodiment comprises at least one polymer block A comprising a vinyl aromatic monomer unit as a main component and at least one polymer block B comprising a conjugated diene monomer unit as a main component.

Due to the above configuration, a block copolymer capable of providing a composition that exhibits good elongation at break and rigidity for practical use and excellent impact resistance at extremely low temperatures and low gloss is obtained.

It is preferable that the block copolymer (I) of the present embodiment has a structure represented by the following formulas.

The block copolymer (I) of the present embodiment may also be a mixture of a plurality of the following structures at an optional proportion.

$$(A\text{-}B)_n$$

$$A\text{-}(B\text{-}A)_n$$

$$A\text{-}B\text{-}A\text{-}B$$

$$B\text{-}A\text{-}B\text{-}A$$

$$B\text{-}(A\text{-}B)_n$$

$$[(A\text{-}B)_n]_m\text{-}Z$$

$$[(B\text{-}A)_n]_m\text{-}Z$$

$$[(A\text{-}B)_n\text{-}B1]_m\text{-}Z$$

$$[(B\text{-}A)_n\text{-}B2]_m\text{-}Z$$

In the respective formulas representing the block copolymer, A is a polymer block comprising a vinyl aromatic monomer unit as a main component, and B is a polymer block comprising a conjugated diene monomer unit as a main component. These definitions clearly differentiate the polymer block A from the polymer block B. The boundary between the polymer block A and the polymer block B needs not to be sharply defined.

The numerals such as B1 and B2 in the formulas are used to distinguish each polymer block.

n is an integer of 1 or more, and preferably an integer of 1 to 16.

m is an integer of 2 or more, preferably an integer of 2 to 12, and more preferably an integer of 2 to 8.

Z represents a coupling agent residue. Examples of coupling agents include, but are not limited to, polyhalogen compounds and acid esters described later.

The block copolymer (I) of the present embodiment preferably has a structure obtained by hydrogenating a polymer with a coupling structure represented by the following formula (1). The coupling ratio is preferably 80% or more.

$$(A\text{-}B)_n\text{-}X \qquad (1)$$

(In the formula (1), A is a polymer block A comprising a vinyl aromatic monomer unit as a main component, B is a polymer block B comprising a conjugated diene monomer unit as a main component, n is an integer of 1 or more, and X is a residue of a coupling agent or a residue of a polymerization initiator.)

The block copolymer (I) with the aforementioned structure may be obtained, for example, by polymerizing to form the polymer block A and the polymer block B sequentially, and hydrogenating the coupled polymer coupling them.

Specifically, in a polymerization process for producing a linear tri-block A-B-A copolymer with a molecular weight of 150,000 or more using typical living anionic polymerization, the amount of polymerization initiator is extremely small. Consequently, trace amounts of inactive components (impurities) contained in the solvent or monomers can significantly affect the molecular weight, leading to a reduced yield. To mitigate these issues, it is necessary to enhance the purification of solvents and monomers, but this approach has the drawback of being economically disadvantageous. Furthermore, in the hydrogenation reaction process, the diffusion efficiency of hydrogen within the system tends to decrease. As a result, achieving the target degree of hydrogenation often requires a prolonged hydrogenation process, resulting in reduced productivity. In a conventional solvent removal process comprising steam stripping and dehydration extrusion steps, excessive load on drive equipment may cause equipment damage, polymer molecular chain scission, or, in some cases, ignition. Moreover, since the dried product is often in the form of crumbs, flakes, or powder rather than pellets, it tends to adhere to the process equipment, leading to reduced yield and contamination.

By configuring the block copolymer (I) of the present embodiment to have the above coupling structure, a high-molecular-weight polymer may include both a coupled branched polymer and an uncoupled polymer (A-B) by adjusting the coupling ratio, and thus characteristics of the composition obtained from the block copolymer (I), such as processability, compatibility with propylene polymers, and surface appearance can be improved in a well-balanced way.

Furthermore, when the block copolymer (I) of the present embodiment is a hydrogenated product of the coupled polymer represented by the above formula (1), the coupling ratio achieved with the coupling agent is preferably 80% or more. The coupling ratio is more preferably 82% or more, and further preferably 84% or more.

When the coupling ratio of the block copolymer (I) is 80% or more, the resulting composition tends to exhibit excellent processability and surface appearance.

The coupling ratio can be controlled within the aforementioned range by adjusting the amount of the coupling agent, reaction time, and reaction temperature.

(Content of polymer block A and polymer block B)

In the block copolymer (I) of the present embodiment, the content of the polymer block A comprising a vinyl aromatic monomer unit as a main component is 3 mass% to 40 mass%, preferably 5 mass% to 38 mass% and further preferably 7 mass% to 36 mass%.

When the content of the polymer block A in the block copolymer (I) of the present embodiment is 3 mass% or more, the composition of the present embodiment described later tends to exhibit excellent tensile strength. When the content of the polymer block A is 40 mass% or less, the composition of the present embodiment described later tends to exhibit excellent elongation at break.

The content of the polymer block A and the polymer block B can be controlled within the aforementioned range by adjusting the feed amount of monomer.

In the block copolymer (I) of the present embodiment, the content of the polymer block B comprising a conjugated diene monomer unit as a main component is 60 mass% to 97 mass%, preferably 62 mass% to 95 mass%, and more preferably 64 mass% to 93 mass%.

The content of the polymer block A in the block copolymer (I) of the present embodiment may be calculated using the mass of the polymer comprising a vinyl aromatic monomer unit as a main component (excluding vinyl aromatic compounds with an average polymerization degree of 30 or less) as determined by oxidative decomposition method of the block copolymer before hydrogenation using t-butyl hydroperoxide with osmium tetroxide as a catalyst (the method described in I. M. Kolthoff et al., J. Polym. Sci. 1, 429 (1946), hereinafter referred to as the osmium tetroxide decomposition method).

The content of the polymer block A in the block copolymer (I) may also be measured using the copolymer after hydrogenation (the block copolymer (I)) by a nuclear magnetic resonance (NMR) spectrometer by the method described in Y. Tanaka, et al., RUBBER CHEMISTRY and TECHNOLOGY 54,685(1981).

The NMR method will be described in detail using the example of styrene as the vinyl aromatic compound and 1,3-butadiene as the conjugated diene compound.

The $^1$H-NMR measurement was performed using a sample prepared by dissolving 30 mg of the block copolymer in 1 g of deuterated chloroform, and the content of polymer block A (in this case, the polystyrene block) (the Ns value) was determined from the ratio of the integral value at a chemical shift of 6.9 ppm to 6.3 ppm relative to the total integral value.

Block styrene intensity (b-St intensity) = (integral value from 6.9 ppm to 6.3 ppm) / 2 Random styrene intensity (r-St intensity) = (integral value from 7.5 ppm to 6.9 ppm) - 3 $\times$ (b-St)

Ethylene/butylene intensity (EB intensity) = Total integral value - 3 $\times$ {(b-St intensity) + (r-St intensity)}/8 Polystyrene block content obtained by NMR method (Ns value) = 104 $\times$ (b-St intensity) / [104 $\times$ {(b-St intensity) + (r-St intensity)} + 56 $\times$ (EB intensity)]

The content of the polymer block A in the copolymer (I') before hydrogenation, as measured by the osmium tetroxide decomposition method (referred to as the "Os value"), and the content of polymer block A in the block copolymer after hydrogenation, as measured by the NMR method (referred to as the "Ns value"), are correlated as expressed by the following formula.

$$\text{Os value} = -\,0.012\,(\text{Ns value})^2 + 1.8\,(\text{Ns value}) - 13.0$$

(Vinyl bond content)

In the block copolymer (I) of the present embodiment, the vinyl bond content of the polymer block B before hydrogenation is 35 to 55 mol%, preferably 36 mol% to 54 mol%, more preferably 37 mol% to 53 mol%, and further preferably 40 mol% to 50 mol%.

When the vinyl bond content of the polymer block B before hydrogenation is 35 mol% or more in the block copolymer (I) of the present embodiment, the composition of the present embodiment described later, prepared using the block copolymer (I) of the present embodiment tends to exhibit improved impact resistance at extremely low temperatures.

When the vinyl bond content of the polymer block B before hydrogenation is 55 mol% or less, the composition of the present embodiment described later tends to exhibit excellent rigidity.

In this specification, the term "vinyl bond content" refers to the total content of 1,2-vinyl bonds (conjugated dienes incorporated into the polymer via 1,2-bonds) and 3,4-vinyl bonds (conjugated dienes incorporated into the polymer via 3,4-bonds) relative to all conjugated dienes (in this regard, when 1,3-butadiene is used as the conjugated diene, the vinyl bond content corresponds to the 1,2-vinyl bond content, and when isoprene is used as the conjugated diene, it corresponds to the 3,4-vinyl bond content).

The vinyl bond content before hydrogenation of the polymer block B may be measured by using a nuclear magnetic resonance (NMR) spectrometer. The microstructure of the conjugated diene monomer units in the block copolymer (I) of the present embodiment, including the cis ratio, trans ratio, and vinyl bond content, can be controlled within the aforementioned range by using a polar compound, as described below, and adjusting its amount.

(Degree of hydrogenation)

In the block copolymer (I) of the present embodiment, the degree of hydrogenation of the conjugated diene monomer unit in the polymer block B is 30 mol% to 90 mol%, preferably 30 mol% to 85 mol%, more preferably 30 mol% to 80 mol%, and further preferably 30 mol% to 77 mol%.

The degree of hydrogenation influences the solubility parameter, flowability, compatibility with propylene resin, and glass transition temperature of the block copolymer (I) of the present embodiment. Accordingly, the preferred degree of hydrogenation is set based on these effects.

When the degree of hydrogenation of the block copolymer (I) of the present embodiment is 30 mol% or more, the composition of the present embodiment described below, prepared using the block copolymer (I) of the present embodiment tends to exhibit improved compatibility with the propylene polymer (III), and enhanced elongation at break and heat resistance.

When the degree of hydrogenation is 90 mol% or less, the composition of the present embodiment described below tends to exhibit improved impact resistance at extremely low temperatures.

The degree of hydrogenation of the block copolymer (I) can be controlled within the aforementioned range by adjusting, for example, the amount of catalyst during hydrogenation. The hydrogenation rate can be controlled by adjusting the amount of catalyst, the feed amount of hydrogen, time, pressure and temperature during hydrogenation.

The degree of hydrogenation of the block copolymer (I) of the present embodiment may be measured by the proton nuclear magnetic resonance ($^1$H-NMR) spectroscopy.

(Weight average molecular weight)

The block copolymer (I) of the present embodiment has a weight average molecular weight of 150,000 to 600,000, preferably 200,000 to 600,000, more preferably 250,000 to 600,000, and further preferably 300,000 to 600,000.

When the block copolymer (I) of the present embodiment has a weight average molecular weight of 150,000 or more, the composition of the present embodiment described later, prepared using the block copolymer (I) of the present embodiment tends to exhibit improved impact resistance at extremely low temperatures and low gloss.

In the composition of the present embodiment, the morphology of the block copolymer (I) varies to form a sea-island structure (sea: components (II) and (III), island: component (I)) depending on the weight average molecular weight of the block copolymer. When the weight average molecular weight of the block copolymer (I) of the present embodiment is 150,000 or more, the morphology of the block copolymer in the composition prepared using the block copolymer of the present embodiment shifts from a co-continuous structure to a sea-island structure (sea: components (II) and (III), island: component (I)) with reduced orientation (residual strain). This shift enables a reduction in the shrinkage ratio of the composition when heated at 110°C for 1,000 hours.

When the weight average molecular weight of the block copolymer (I) is less than 150,000, the morphology of the block copolymer in the composition prepared using the block copolymer forms a co-continuous structure.

When the weight average molecular weight of the block copolymer (I) is 600,000 or less, the composition prepared using the block copolymer of the present embodiment tends to exhibit enhanced processability and improved appearance.

The weight average molecular weight of the block copolymer (I) may be determined from the peak molecular weight of a chromatogram obtained by gel permeation chromatography (GPC) using the method described in Examples below, based on a calibration curve prepared using the peak molecular weights of commercially available standard polystyrene.

The molecular weight distribution of the block copolymer measured by GPC is not particularly limited and may exhibit a polymodal molecular weight distribution with two or more peaks or a monomodal molecular weight distribution with a single peak.

The weight average molecular weight of the block copolymer (I) can be controlled within the aforementioned range by adjusting the amount of monomer added, amount of the initiator added, polymerization time, and polymerization temperature during the polymerization process.

(Melt flow rate)

The block copolymer (I) of the present embodiment preferably has a melt flow rate (MFR, measured in accordance with ISO 1133 at 230°C under a 2.16 kg load) of less than 0.1 g/10 min, more preferably 0.01 g/10 min or less, and further preferably exhibits no flow.

When the MFR of the block copolymer (I) of the present embodiment is less than 0.1 g/10 min, the composition of the present embodiment described later tends to exhibit improved impact resistance and low gloss, and the shrinkage ratio of the composition when heated at 110°C for 1,000 hours tends to be reduced.

The melt flow rate of the block copolymer can be measured by the method described in Examples below and can be controlled within the aforementioned range by adjusting the amount of monomer added, amount of the initiator added, amount of the polymerization initiator added, polymerization time, and polymerization temperature during the polymerization process.

(Form)

The form of the block copolymer (I) of the present embodiment is preferably selected from the group consisting of pellets, flakes, crumbs, and powder, and more preferably selected from flakes, crumbs and powder.

When the form of the block copolymer (I) of the present embodiment is selected from flakes, crumbs and powder, they have a larger specific surface area than pellets, which facilitates the evaporation of solvents, reduces the amount of residual cyclohexane and the like, and thereby allowing for a reduction in the VOC content of the composition of the present embodiment described later.

The form of the block copolymer (I) of the present embodiment may be controlled by adjusting the weight average molecular weight or by the operation in the step for separating the block copolymer after polymerization from the solvent.

{Method for producing block copolymer}

The block copolymer (I) of the present embodiment may be produced, for example, by performing polymerization in an organic solvent using an organic alkaline metal compound as a polymerization initiator to obtain a block copolymer, and then carrying out a hydrogenation reaction.

The polymerization form may be batch polymerization or continuous polymerization, or may be a combination thereof. From the viewpoint of obtaining a block copolymer having a narrow molecular weight distribution, a batch polymerization method is preferred.

The polymerization temperature is generally 0°C to 150°C, preferably 20°C to 120°C, more preferably 40°C to 100°C, and even more preferably, 40°C to 80°C.

The polymerization time depends on the block copolymer intended, and is usually with 24 hours and preferably 0.1 hours to 10 hours. From the viewpoint of obtaining a block copolymer having a narrow molecular weight distribution and high strength, the polymerization time is more preferably 0.5 hours to 3 hours.

The polymerization pressure, which is not particularly limited, is only required to be in a pressure range sufficient maintaining nitrogen and the solvent in a liquid phase.

The polymerization system preferably includes no impurities such as water, oxygen and carbon dioxide, which may deactivate the polymerization initiator and the living polymer.

Examples of the organic solvent include, but are not limited to, aliphatic hydrocarbons, such as n-butane, isobutane, n-pentane, n-hexane, n-heptane, and n-octane; alicyclic hydrocarbons, such as cyclohexane, cycloheptane, and methylcyclopentane; and aromatic hydrocarbons, such as benzene, xylene, toluene, and ethylbenzene.

The organic alkali metal compound as the polymerization initiator is preferably an organic lithium compound.

As the organic lithium compound, which is not limited, for example, organic monolithium compounds, organic dilithium compounds, and organic polylithium compounds can be used.

Examples of the organic lithium compound include, but are not limited to, ethyllithium, n-propyllithium, isopropyllithium, n-butyllithium, sec-butyllithium, t-butyllithium, phenyllithium, hexametylenedilithium, butadienyllithium, and isopropenyldilithium. Of these, from the viewpoint of polymerization activity, n-butyllithium and sec-butyllithium are preferred.

The amount of the organic alkali metal compound used as the polymerization initiator depends on the molecular weight of the polymer intended, and is generally preferably in the range of 0.01 phm to 0.5 phm (parts by mass per 100 parts by mass of the monomer). more preferably in the range of 0.03 phm to 0.3 phm, and even more preferably in the range of 0.05 phm to 0.15 phm.

The total amount of the 1,2-bonds and 3,4-bonds of the conjugate diene monomer unit of the polymer block B before hydrogenation of the block copolymer (I) of the present embodiment can be controlled by using a Lewis base (e.g., an ether or an amine). The amount of the Lewis base used is adjusted in accordance with the proportion of the 1,2-bonds and 3,4-bonds intended. By adding a Lewis base and the metal alkoxide described later in two or more separate stages, a block copolymer (I) comprising a polymer block B with varying proportions of 1,2-bonds and 3,4-bonds may be produced.

Examples of the Lewis base include, but are not limited to, ether compounds, etheric compounds having two or more oxygen atoms, and tertiary amine compounds.

Examples of the tertiary amine compound include, but are not limited to, pyridine, N,N,N',N'-tetramethylethylenediamine, tributylamine, tetramethylpropanediamine, 1,2-dipiperidinoethane, and bis[2-(N,N-dimethylamino)ethyl] ether. Only one of these may be used, or two or more of these may be used in combination.

Preferable tertiary amine compounds are compounds having two amines. Furthermore, of these, compounds having a structure showing symmetry in the molecule are more preferable, and N,N,N',N'-tetramethylethylenediamine, bis [2-(N,N-dimethylamino)ethyl]ether, and 1,2-dipiperidinoethane are even more preferable.

In the step of producing the block copolymer (I) of the present embodiment, polymerization may be performed under coexistence of the Lewis base, organic lithium compound, and alkali metal alkoxide aforementioned. The alkali metal alkoxide herein is a compound represented by the general formula MOR, wherein M is an alkali metal, and R is an alkyl group.

The alkali metal of the alkali metal alkoxide is preferably sodium or potassium from the viewpoint of a high proportion of the 1,2-bonds and 3,4-bonds, a narrow molecular weight distribution, and a high polymerization speed.

The alkali metal alkoxide is, but are not limited to, preferably a sodium alkoxide, lithium alkoxide, or potassium alkoxide having an alkyl group having 2 to 12 carbon atoms, more preferably a sodium alkoxide or potassium alkoxide having an alkyl group having 3 to 6 carbon atoms, and even more preferably sodium t-butoxide, sodium t-pentoxide, potassium t-butoxide, or potassium t-pentoxide. Of these, sodium alkoxides such as sodium t-butoxide and sodium t-pentoxide are still more preferable.

In the step of producing the block copolymer (I) of the present embodiment, the hydrogenation method is not particularly limited. For example, hydrogenating a block copolymer obtained as described above by supplying hydrogen in the presence of a hydrogenation catalyst can provide a block copolymer in which the double bond residue of the conjugated diene monomer unit has been hydrogenated.

When the polymerization step and hydrogenation step have been conducted in an inert hydrocarbon solvent, for example, removal of the inert hydrocarbon solvent enables the block copolymer to be isolated.

Specific examples of a method of removing the solvent include, but are not particularly limited to, steam stripping. Water-containing crumbs are obtained by steam stripping, and drying the water-containing crumbs can provide the block copolymer.

In steam stripping, a surfactant is preferably used as a crumbing agent. Examples of such surfactant include, but are not particularly limited to, anionic surfactants, cationic surfactants, and nonionic surfactants, as described above. These surfactants can be generally added at 0.1 ppm to 3000 ppm to water in a stripping zone. In addition to the surfactant, a water-soluble salt of metal such as Li, Na, Mg, Ca, Al, or Zn can be used as a dispersion aid for crumbs.

The concentration of the block copolymer in a crumb form dispersed in water, which is obtained through the polymerization step of block copolymer (I) and the steam stripping, is generally 0.1 mass% to 20 mass% (proportion with respect to water in the stripping zone). Within this range, crumbs having a favorable particle size can be obtained without disruption on operation. These crumbs of the block copolymer (I) is dewatered to adjust the water content to 1 mass% to 30 mass%. Thereafter, the crumbs are preferably dried until the water content reaches 1 mass% or less.

In the dewatering step of the crumb, water removal may be performed using a compression dewatering machine, such as a roll, a Banbury-type dewatering machine, or a screw extrusion dewatering machine, or using a conveyor or a box-type hot air dryer. Dewatering and drying may also be performed simultaneously.

In the method for producing the block copolymer (I) of the present embodiment, a deashing step for removing metals derived from a polymerization initiator or the like may be employed as required.

In the method for producing the block copolymer of the present embodiment, a step of adding an antioxidant, a neutralizing agent, a surfactant, or the like may be further employed as required.

The antioxidant is not limited to the following, and examples include a hindered phenol compound, a phosphorus compound, and a sulfur compound. They may be used singly or two or more of them may be used in combination.

Examples of the hindered phenolic compounds include, but are not limited to, 2,6-di-t-butyl-4-methylphenol, n-octadecyl-3-(4'-hydroxy-3',5'-di-t-butylphenyl)propionate, [octadecyl-3-(3,5-dibutyl-t-butyl-4-hydroxyphenyl)propionate], 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenyl acrylate, 2,4-di-t-amyl-6-[1-(3,5-di-t-amyl-2-hydroxyphenyl)ethyl]phenyl acrylate, and 2-[1-(2-hydroxy-3,5-di-tert-pentylphenyl)] acrylate.

Examples of the phosphorus compounds and sulfur compounds, include, but are not limited to, 3,3'-thiodipropionate, 2-mercaptobenzimidazole, 4,6-bis(octylthiomethyl)-o-cresol, thiodiethylenebis[3-(3,5-di-tert-butyl-4-hydroxyphenyl)propionate], dilauryl thiodipropionate, lauryl stearyl thiodipropionate, pentaerythritol-tetrakis(6-lauryl thiopropionate), tris(nonylphenyl)phosphite, and tris(2,4-di-t-butylphenyl)phosphite.

The amount of the antioxidant to be added is preferably 0.01 parts by mass to 1 parts by mass, more preferably 0.05 parts by mass to 0.5 parts by mass, and even more preferably 0.1 parts by mass to 0.4 parts by mass based on 100 parts by mass of the block copolymer (I).

Examples of the neutralizing agent include, but are not limited to, various metal stearates, hydrotalcite, and benzoic acid.

Examples of the surfactant include, but are not limited to, anionic surfactants, nonionic surfactants, and cationic surfactants.

Examples of the anionic surfactant include, but are not limited to, a fatty acid salt, an alkyl sulfate ester salt, and an alkyl aryl sulfonate salt.

Examples of the nonionic surfactant include, but are not limited to, polyoxyethylene alkyl ether and polyoxyethylene alkyl aryl ether.

Further, examples of the cationic surfactant include, but are not limited to, an alkyl amine salt and a quaternary ammonium salt.

In the block copolymer (I) of the present embodiment, an antiblocking agent can be blended as required, into crumbs thereof, for the purpose of preventing blocking.

Examples of the antiblocking agent include, but are not limited to, calcium stearate, magnesium stearate, zinc stearate, polyethylene, polypropylene, ethylene bisstearyl amide, talc, and amorphous silica.

The amount of the anti-blocking agent mixed is preferably 500 to 10,000 ppm, and more preferably 1,000 to 7,000 ppm based on the block copolymer (I). The anti-blocking agent is preferably incorporated in a state where it is attached to the surface of the crumbs, although a portion of the agent may be included inside the crumbs.

The block copolymer (I) of the present embodiment includes compositions containing the above additives.

{Composition}

The composition of the present embodiment comprises the block copolymer (I) of the present embodiment, and the following component (II) and component (III).

That is, the composition of the present embodiment comprises:

a component (I): the block copolymer (I) of the present embodiment in an amount of 1 to 58 parts by mass,

a component (II): an ethylene copolymer in an amount of 11 to 68 parts by mass, and

a component (III): a propylene copolymer in an amount of 100 parts by mass.

(Component (II): ethylene copolymer)

The composition of the present embodiment comprises an ethylene copolymer as the component (II).

The ethylene copolymer of the component (II) is not particularly limited as long as it has an ethylene unit content of 50 mass% or more relative to all monomer units, and an ethylene/α-olefin copolymer is particularly preferred.

An ethylene/$\alpha$-olefin copolymer in which the content of the ethylene unit is 50 to 80 mass% and the content of the $\alpha$-olefin unit is 20 to 50 mass% when the total content of the ethylene unit and the $\alpha$-olefin unit is 100 is preferred. When the ethylene unit content falls within the above range, the compatibility of the component (II) with other components in the composition of the present embodiment is enhanced, and the composition of the present embodiment tends to exhibit improved fine dispersibility, and excellent rigidity, elongation at break, and impact resistance.

Examples of $\alpha$-olefins constituting the ethylene/$\alpha$-olefin copolymer include, but are not limited to, 1-propylene, 1-butene, 2-methylpropylene, 1-pentene, 3-methyl-1-butene, 1-hexene, 4-methyl-1-pentene, and 1-octene.

The component (II) may include one of these $\alpha$-olefins, or two or more of them.

Among them, $\alpha$-olefin having 4 to 8 carbon atoms is preferred, and 1-octene is more preferred.

When the ethylene/$\alpha$-olefin copolymer includes a 1-octene unit as an $\alpha$-olefin unit, the composition of the present embodiment tends to exhibit improved elongation at break.

Examples of ethylene/$\alpha$-olefin copolymers include an ethylene/$\alpha$-olefin random copolymer, and an ethylene/$\alpha$-olefin block copolymer. Of them, an ethylene/$\alpha$-olefin block copolymer, in particular, an ethylene/$\alpha$-olefin block copolymer including a polymer block composed of ethylene and an ethylene/$\alpha$-olefin copolymer block is preferred.

The ethylene copolymer of component (II) used in the composition of the present embodiment preferably has a crystalline melting peak at 110 to 125°C and a heat of fusion of 20 to 60 J/g.

Herein, for the component (II), having a crystalline melting peak at 110 to 125°C and a heat of fusion of 20 to 60 J/g serves as an indicator that the component (II) contains a polymer block composed of crystalline ethylene. The heat of fusion of the component (II) is preferably 20 J/g or more, more preferably 30 J/g or more from the viewpoint of high temperature strength of the composition of the present embodiment. The heat of fusion of the component (II) is preferably 60 J/g or less, more preferably 50 J/g or less from the viewpoint of the impact resistance at extremely low temperatures of the composition of the present embodiment.

In addition to having a polymer block composed of crystalline ethylene, the component (II) preferably exhibits amorphous characteristics derived from the ethylene/$\alpha$-olefin copolymer block.

The amorphous characteristics may be characterized by the glass transition temperature, and the glass transition temperature of component (II), as determined by DSC, is preferably -80°C or more, more preferably -75°C or more, and preferably -50°C or less, and more preferably -60°C or less.

Since the component (II) has such a structure, the composition of the present embodiment tends to exhibit improved rigidity and improved impact resistance at extremely low temperatures.

The crystalline melting peak, heat of fusion, and glass transition temperature of the component (II) may be measured by differential scanning calorimetry (DSC).

The crystalline melting peak is the top temperature of the melting peak obtained by a differential scanning calorimeter.

The heat of fusion may be determined from the area of the melting peak obtained by a differential scanning calorimeter.

The glass transition temperature is defined as the intersection of the baseline and the tangent line at the inflection point, obtained by a differential scanning calorimeter.

Specific measurement conditions for determining these values are as follows.

A 10 mg sample is taken and using DSC, the sample is melted at a temperature increase rate of 100°C/ minute from 25°C to 200°C, held at 200°C for 1 minute, and then crystallized at a cooling rate of 10°C/ minute to -130°C, held at -130°C for 10 minutes, and then measured at a temperature increase rate of 10°C / minutes to 200°C to determine the values.

The ethylene copolymer of the component (II) comprises an ethylene unit as a main component, but may also include other monomer units in addition to the ethylene unit.

Herein the phrase "comprising as a main component" means that the monomer unit accounts for 50 mass% or more, and preferably 60 to 100 mass% of the entire copolymer.

Examples of other monomers include $\alpha$-olefin such as 1-propylene, 1-butene, 2-methylpropylene, 1-pentene, 3-methyl-1-butene, 1-hexene, 4-methyl-1-pentene, and 1-octene. 1-propylene, 1-butene, 1-hexene, and 1-octene are preferred.

When the component (II) includes an $\alpha$-olefin unit having 3 to 8 carbon atoms with a carbon-carbon double bond at the terminal position, a single type of $\alpha$-olefin or two or more types of $\alpha$-olefins may be copolymerized with ethylene.

When the component (II) is an ethylene/$\alpha$-olefin copolymer, the component (II) may include other monomer units such as a monomer unit based on non-conjugated diene (a non-conjugated diene unit) in addition to ethylene units and $\alpha$-olefin units. Examples of non-conjugated dienes include a linear non-conjugated diene such as 1,4-hexadiene, 1,6-octadiene, 2-methyl-1,5-hexadiene, 6-methyl-1,5-heptadiene, and 7-methyl-1,6-octadiene; and a cyclic non-conjugated diene such as cyclohexadiene, dicyclopentadiene, methyl tetrahydroindene, 5-vinyl norbornene, 5-ethylidene-2-norbornene, 5-methylene-2-norbornene, 5-isopropylydene-2-norbornene, and 6-chloromethyl-5-isopropenyl-2-norbornene. 5-ethylidene-2-norborne and dicyclopentadiene are preferred.

The content of the ethylene unit in the component (II) is preferably 50 to 80 mass% relative to the entire component (II). A higher content of the ethylene unit in the component (II) is preferable to prevent fusion due to blocking of the component (II) whereas a lower content of the ethylene unit is preferable for enhancing impact resistance of the composition of the present embodiment at extremely low temperatures.

The lower limit of the content of the ethylene unit in the component (II) is preferably 55 mass% or more, and more preferably 60 mass% or more.

The upper limit of the content of the ethylene unit in the component (II) is preferably 75 mass% or less. The content of the ethylene unit and the content of the $\alpha$-olefin unit in the component (II) may be determined by infrared spectroscopy.

When the component (II) includes other monomer units such as a non-conjugated diene unit, the content of those other monomer units is usually 10 mass% or less, and preferably 5 mass% or less relative to the entire component (II).

The content of the non-conjugated diene unit may also be determined by infrared spectroscopy.

Preferred examples of the component (II) used in the composition of the present embodiment include an ethylene block copolymer comprising a polymer block composed of ethylene and an ethylene/$\alpha$-olefin copolymer block such as an ethylene/1-butene copolymer, an ethylene/1-hexene copolymer, an ethylene/1-octene copolymer, an ethylene/propylene/1-butene copolymer, an ethylene/propylene/1-hexene copolymer, and an ethylene/propylene/1-octene copolymer.

The component (II) may include one of these ethylene/$\alpha$-olefin copolymer blocks, or two or more of them in combination.

Of them, the component (II) is most preferably an ethylene block copolymer comprising a polymer block composed of ethylene and an ethylene/1-octene copolymer block.

The melt flow rate of the component (II) is not limited, and usually 10 g/ 10 minute or less, and preferably 8.0 g/10 min or less, more preferably 5.0 g/10 min or less, and further preferably 3.0 g/10 min or less from the viewpoint of the strength of the composition of the present embodiment.

The melt flow rate of the component (II) is usually 0.01 g/10 min or more, preferably 0.05 g/10 min or more, and more preferably 0.10 g/10 min or more from the viewpoint of the flowability of the composition of the present embodiment.

The melt flow rate (MFR) of the component (II) is measured according to ASTM D1238 under conditions of a measurement temperature of 190°C and a measurement load of 21.18 N.

The density of the component (II) is preferably 0.880 g/ cm$^3$ or less, and more preferably 0.875g/ cm$^3$ or less from the viewpoint of the impact resistance at extremely low temperatures of the composition of the present embodiment. The lower limit is not particularly limited, but is typically 0.850 g/ cm$^3$ or more.

The density of the component (II) is measured according to ISO 1183 -Method A at a measurement temperature of 23°C.

The component (II) may be synthesized by the methods disclosed in Japanese Translation of PCT International Application Publication No. 2007-529617, Japanese Translation of PCT International Application Publication No. 2008-537563, and Japanese Translation of PCT International Application Publication No. 2008-543978.

For example, the component (II) can be produced by preparing a composition comprising a mixture or reaction product obtained by combining the first olefin polymerization catalyst, the second olefin polymerization catalyst capable of producing a polymer having chemical or physical properties different from those of a polymer produced by the first olefin polymerization catalyst under equivalent polymerization conditions, and a chain shuttling agent, and contacting the composition with the above ethylene and $\alpha$-olefin under addition polymerization conditions.

For the polymerization of the component (II), a continuous solution polymerization is preferably used.

In the continuous solution polymerization, catalyst components, a chain shuttling agent, monomers and, as needed, a solvent, an auxiliary, a scavenger, and a polymerization auxiliary are continuously supplied to the reaction zone and the polymer product is continuously removed.

Furthermore, the length of the polymer block may be controlled by adjusting the ratio and type of the catalyst, the ratio and type of the chain shuttling agent, the polymerization temperature and other factors.

In the method of synthesizing the ethylene copolymer of the component (II), conditions disclosed in Japanese Translation of PCT International Application Publication No. 2007-529617, Japanese Translation of PCT International Application Publication No. 2008-537563, and Japanese Translation of PCT International Application Publication No. 2008-543978 may be used as other conditions.

Alternatively, a commercially available product may be used as the component (II). Examples include Engage (registered trademark)-XLT series and INFUSE (registered trademark) series manufactured by The Dow Chemical Company.

Among the components (II), those comprising an ethylene/octene copolymer block were not commercially available as products until commercial production of the INFUSE (registered trademark) series began in 2007 and the Engage (registered trademark)-XLT series in 2011 by The Dow Chemical Company.

The composition of the present embodiment may comprise a single type of the component (II) or two or more types of the component (II) differing in monomer unit composition or physical properties.

(Component (III): propylene polymer)

The composition of the present embodiment includes the component (III): propylene polymer.

The propylene polymer of the component (III) refers to a polymer in which the content of the propylene unit relative to all monomer units is more than 50 mass%.

In other words, the component (III) is a polypropylene resin in which the content of the propylene unit is more than 50 mass% and 100 mass% or less.

The type of the propylene polymer of the component (III) is not particularly limited, and it may be a propylene homopolymer, or a propylene copolymer including an $\alpha$-olefin unit other than propylene in addition to propylene unit (the "$\alpha$-olefin" in this case also includes ethylene) and a monomer unit other than $\alpha$-olefin.

A propylene random copolymer and a propylene block copolymer may be used as the propylene copolymer.

In the component (III), the propylene polymer component contributes to the rigidity and the heat resistance of the composition of the present embodiment.

Examples of $\alpha$-olefin units other than propylene contained in the propylene copolymer include ethylene and an $\alpha$-olefin unit having 4 to 20 carbon atoms.

Examples of $\alpha$-olefin units having 4 to 20 carbon atoms include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4-methyl-1-pentene, 2-ethyl-1-hexene, and 2,2,4-trimethyl-1-pentene.

Ethylene and $\alpha$-olefin having 4 to 10 carbon atoms are preferred as the $\alpha$-olefin other than propylene, and ethylene, 1-butene, 1-hexene, and 1-octene are more preferred.

Examples of the propylene polymer of the component (III) include a propylene homopolymer, a propylene/ethylene copolymer, a propylene/1-butene copolymer, a propylene/1-hexene copolymer, a propylene/1-octene copolymer, a propylene/ethylene/1-butene copolymer, a propylene/ethylene/1-hexene copolymer, and a propylene/ethylene/1-octene copolymer. A propylene homopolymer, and a copolymer of ethylene, at least one monomer selected from $\alpha$-olefins having 4 to 10 carbon atoms, and propylene are preferred.

A particularly preferred component (III) is a polypropylene block copolymer obtained by the polymerization of propylene homopolymer in the first step and the polymerization of an ethylene/propylene copolymer in the second step from the viewpoint of the impact resistance at extremely low temperatures and elongation at break of the composition of the present embodiment.

The content of the propylene units in the component (III) is more than 50 mass% and 100 mass% or less, preferably 70 to 100 mass%, and more preferably 90 to 100 mass% based on the entire component (III).

When the content of the propylene unit in the component (III) is at or above the lower limit, the composition of the present embodiment tends to exhibit improved rigidity and heat resistance.

The content of the propylene unit and the content of the $\alpha$-olefin unit such as ethylene in the component (III) may be determined by infrared spectroscopy.

The melt flow rate of the component (III) is preferably 1 g/10 min or more, more preferably 5 g/10 min or more, further preferably 10 g/10 min or more, and more preferably 20 g/10 min or more from the viewpoint of the appearance of the molded article of the composition of the present embodiment.

The melt flow rate of the component (III) is typically 150 g/10 min or less, preferably 130 g/10 min or less, and more preferably 100 g/10 min or less from the viewpoint of tensile strength.

The melt flow rate of the component (III) is measured according to ISO 1133 under conditions of a measurement temperature of 230°C and a measurement load of 21.18 N.

When the component (III) is a blend of propylene polymers having different MFRs, the MFR of the component (III) may be calculated using the following equation:

$$\log (MFR\ blend) = w1 \log (MFR1) + w2 \log (MFR2) + \ldots\ldots + wi \log (MFRi) + \ldots + wn \log (MFRn) \qquad \text{(equation)}$$

wherein wi is the mass fraction of the constituent i, MFRi is the MFR of the constituent i, and n is the total number of the constituents in the blend. w1 + w2 + ... + wi + ... wn = 1.

A known polymerization method using a known olefin polymerization catalyst may be used as the method for producing the propylene polymer of the component (III).

Examples include multistage polymerization using Ziegler-Natta catalyst.

Slurry polymerization, solution polymerization, bulk polymerization, and gas phase polymerization may be used as the multistage polymerization, and two or more of them may be used in combination.

Alternatively, a commercially available product may be used as the component (III).

The propylene polymer of the component (III) are available from the manufacturers listed below, and may be accordingly selected.

Commercially available products include, for example, PrimPolypro (registered trademark) manufactured by Prime Polymer Co., Ltd., Sumitomo NOBLEN (registered trademark) manufactured by Sumitomo Chemical Co., Ltd., polypropylene block copolymer manufactured by SunAllomer Ltd., NOVATEC (registered trademark) PP manufactured by Japan Polypropylene Corporation, Moplen (registered trademark) and Hifax X (registered trademark) manufactured by Lyondell Basell Industries N.V., Exxon Mobil PP manufactured by Exxon Mobil Corporation, Formolene (registered trademark) manufactured by Formosa Plastics Corporation, Borealis PP manufactured by Borealis, SEETECPP manufactured by LG Chemical, ASI POLYPROPYLENE manufactured by A. Schulman Inc., INEOSPP manufactured by INEOS Olefins & Polymers, Braskem PP manufactured by Braskem, Sumsung Total manufactured by SAMSUNG TOTAL PETROCHEMICALS Co., Ltd., Sabic (registered trademark) PP manufactured by Sabic, TOTAL PETROCHEMICALS Polypropylene manufactured by TOTAL PETROCHEMICALS, and YUPLENE (registered trademark) manufactured by SK Geo Centric.

The composition of the present embodiment may comprise a single type of the component (III) or two or more types of the component (III) differing in monomer unit composition or physical properties.

(Content ratio)

In the composition of the present embodiment, the content of the component (I) is 1 part by mass or more, preferably 5 parts by mass or more, more preferably 10 parts by mass or more, further preferably 15 parts by mass or more, and even more preferably 20 parts by mass or more based on 100 parts by mass of the component (III) from the viewpoint of the impact resistance at extremely low temperatures, elongation at break and heat resistance of the resulting molded article. The content of the component (I) is 58 parts by mass or less, preferably 50 parts by mass or less, more preferably 45 parts by mass or less, further preferably 40 parts by mass or less, and even more preferably 35 parts by mass or less based on 100 parts by mass of the component (III) from the viewpoint of the impact resistance at extremely low temperatures and heat resistance of the resulting molded article.

In the composition of the present embodiment, the content of the component (II) is 11 parts by mass or more, preferably 15 parts by mass or more, more preferably 20 parts by mass or more, further preferably 25 parts by mass or more, and even more preferably 30 parts by mass or more based on 100 parts by mass of the component (III) from the viewpoint of the low temperature properties and heat resistance of the resulting molded article. The content of the component (II) is 68 parts by mass or less, preferably 65 parts by mass or less, more preferably 60 parts by mass or less, further preferably 55 parts by mass or less, and even more preferably 50 parts by mass or less based on 100 parts by mass of the component (III) from the viewpoint of the heat resistance of the resulting molded article.

(Other components)

The composition of the present embodiment may also include an optional component described below, such as an additive, an inorganic filler, an organic filler, a resin different from the components (I) to (III) (hereinafter referred to as "other resins") without significantly impairing the effects of the present invention.

Examples of additives include colorants, antioxidants, weathering agents, thermal stabilizers, light stabilizers, ultraviolet radiation absorbers, neutralizers, lubricants, antifogging agents, anti-blocking agents, slip agents, flame retardants, dispersants, antistatic agents, conductivity-imparting agents, metal deactivators, molecular weight adjusters, antibacterial agents, and fluorescent brighteners.

These additives may be incorporated in amounts ranging from 0.01 to 2 parts by mass based on 100 parts by mass of the total of components (I) to (III).

Examples of other resins which may be contained in the composition of the present embodiment include a polyester elastomer, a urethane elastomer, a polyester resin, a polyamide resin, a polyurethane resin, a styrene resin (excluding the resin corresponding to the component (I)), an acrylic resin, a polycarbonate resin, a polyvinyl chloride resin, and a polyolefin resin such as polypropylene resin (excluding the resin corresponding to the component (II) or (III)), and an elastomer other than those described above.

The other resins mentioned above may be included singly or in a combination of two or more.

(Method for producing composition)

The composition of the present embodiment may be produced by kneading the components (I) to (III) and other components using a typical extruder, a Banbury mixer, a roll, Brabender Plastograph, or Brabender Kneader by a usual method.

Among these methods, an extruder, in particular a twin-screw extruder is preferably used.

The composition of the present embodiment may be produced by melt-kneading in an extruder or the like by heating at a temperature of typically 160 to 240°C, and preferably 180 to 220°C. The composition of the present embodiment may be partially crosslinked by incorporating the crosslinking agent or crosslinking auxiliary described below and subjecting the mixture to dynamic heat treatment.

An organic peroxide is preferably used as the crosslinking agent for partially crosslinking the composition of the present embodiment. Examples of organic peroxides include 2,5-dimethyl-2,5-di(t-butylperoxy)hexane, 2,5-dimethyl-2,5-di(t-butylperoxy)-3-hexyne, 1,3-bis(t-butylperoxyisopropyl)benzene, 1,1-di(t-butylperoxy)-3,5,5-trimethylcyclohexane, 2,5-dimethyl-2,5-di(peroxybenzoyl)-3-hexyne, and dicumyl peroxide.

Examples of crosslinking auxiliaries used in partial crosslinking with these organic peroxides include a compound having a radically polymerizable carbon-carbon double bond, such as N,N'-m-phenylene bismaleimide, toluylene bismaleimide, P-quinone dioxime, p-dinitrobenzene, 1,3-diphenylguanidine, trimethylolpropane triacrylate, divinylbenzene, ethylene glycol dimethacrylate, polyethylene glycol dimethacrylate, trimethylolpropane trimethacrylate, and allyl methacrylate, and a compound having a functional group that reacts with the linear carbon chain of the component (II).

{Airbag cover}

The composition of the present embodiment can be formed into a desired molded article by applying conventional injection molding or, as needed, various molding methods such as gas-assisted injection molding, injection-compression molding, or short-shot foam molding.

The composition of the present embodiment is suitable as a material for an airbag cover.

The airbag cover of the present embodiment is preferably produced by injection molding, and molding conditions for injection molding are as follows.

The molding temperature in the injection molding of the airbag cover is typically 150 to 300°C, preferably 160 to 280°C.

The injection pressure is usually 5 to 100 MPa, and preferably 10 to 80 MPa.

The mold temperature is usually 0 to 80°C, and preferably 20 to 60°C.

The airbag cover obtained as described above is suitably used in an airbag system that activates and deploys upon detecting impact or deformation during collisions or similar accidents in high-speed vehicles such as automobiles.

The airbag cover of the present embodiment may be suitably used as a driver's seat airbag cover, a front passenger's seat airbag cover, a pedestrian airbag cover, a knee airbag cover, a side airbag cover, and a curtain airbag cover.

Examples

Hereinafter the present embodiment will be described in detail with reference to Examples and Comparative Examples, but the present invention is not limited to the following Examples.

First, the evaluation methods and the methods for measuring physical properties applied to Examples and Comparative Examples will now be described below.

{Method for identifying block copolymer structure and method for measuring physical properties}

(Peak top molecular weight, weight average molecular weight, and coupling ratio of block copolymer)

Each molecular weight was measured by gel permeation chromatography (GPC) [apparatus: manufactured by Waters Corporation] under the following conditions.

The molecular weight of the peak top of the block copolymer (corresponding to a non-coupled diblock component in the block copolymer with a coupling structure) was determined from the resultant chromatogram using a calibration curve obtained by measurement on commercially available standard polystyrene (formed using the peak molecular weight of standard polystyrene).

A base line including all the peaks was set, and the weight average molecular weight of the total block copolymer was calculated in the same manner.

<Measurement conditions>

GPC; ACQUITY APC system (manufactured by Nihon Waters K.K.)

System (measurement/analysis) software; Empower 3

Detector; differential refractive index (RI) detector

Refractive index unit full scale; 500 μRIU

Output full scale; 2000 mV

Sampling rate; 10 points/sec

Column; ACQUITY APC XT125 (4.6 mm × 150 mm); 1

ACQUITY APC XT200 (4.6 mm × 150 mm); 1

ACQUITY APC XT900 (4.6 mm × 150 mm); 1

ACQUITY APC XT450 (4.6 mm × 150 mm); 1

Solvent; tetrahydrofuran (THF)

Flow rate; 1.0 mL/ min

Concentration; 0.1 mg/mL

Column temperature; 40°C

Injection volume; 20 μL

<Coupling ratio>

The coupling ratio was calculated from the ratio of the areas of the unreacted diblock component to the coupled components, relative to the total area in the block copolymer with a coupling structure, by vertically partitioning the inflection point of each curve between peaks obtained in the above GPC.

(Content of vinyl aromatic monomer unit in block copolymer)

A given amount of the block copolymer was dissolved in chloroform, and the solution was analyzed using an ultraviolet spectrophotometer (manufactured by SHIMADZU CORPORATION, UV-2450). The content of vinyl aromatic monomer units (styrene) was calculated using a calibration curve from the peak intensity of an absorption wavelength (262 nm) attributed to the vinyl aromatic compound component (styrene).
The content of the conjugated diene monomer unit in the block copolymer was calculated from (100 - content of all vinyl aromatic monomer unit).

(Ratio of 1,2-bond and 3,4-bond in conjugated diene monomer unit in polymer block B of block copolymer (vinyl bond content))

The ratio of 1,2-bonds and 3,4-vinyl bonds in the conjugated diene monomer unit in the block copolymer (vinyl bond content) was measured using a nuclear magnetic resonance (NMR) spectrometer under the following measurement conditions.
After the completion of all the reactions (for the hydrogenated block copolymer, after the completion of hydrogenation reaction), methanol was added in a large amount to the reaction solution to precipitate and recover the block copolymer. Subsequently, the block copolymer recovered was extracted with acetone, and the extract was vacuum-dried and used as a sample for analysis. The conditions for measurement are as follows.

<Measurement Conditions>

Measurement instrument: JNM-LA400 (manufactured by JEOL Ltd.)

Solvent: Deuterated chloroform

Sample concentration: 50 mg/ml

Observation frequency: 400 MHz

Chemical shift reference: TMS (tetramethylsilane)

Pulse delay: 2.904 seconds

Number of scans: 64

Pulse width: 45°

Measurement temperature: 26°C

The proportion of the 1,2-bonds and 3,4-bonds (vinyl bond content) in the conjugate diene monomer unit included in the polymer block B in the block copolymer was determined from the ratio of the total peak area of the 1,2-bonds and 3,4-bonds to the total area of all the peaks related to the conjugated diene monomer unit (1,2-bonds, 3,4-bonds, and 1,4-bonds) in the obtained peaks.

(Content of polymer block A in block copolymer)

The content of the polymer block A comprising a vinyl aromatic monomer unit as a main component was measured using the block copolymer before hydrogenation using a nuclear magnetic resonance (NMR) spectrometer (the method described in Y. Tanaka, et al., RUBBER CHEMISTRY and TECHNOLOGY 54,685 (1981), hereinafter referred to as the "NMR" method).

(Degree of hydrogenation of conjugated diene monomer unit in polymer block B of block copolymer)

The degree of hydrogenation of the double bonds in the conjugated diene monomer unit in the polymer block B of the block copolymer was measured using a nuclear magnetic resonance (NMR) spectrometer under the same conditions as for the measurement method of the above (Ratio of 1,2-bond and 3,4-bond)

The degree of hydrogenation of double bonds in the conjugate diene monomer unit included in the polymer block B in the block copolymer was determined by calculating the ratio of the total peak area of the hydrogenated 1,2-bonds and hydrogenated 3,4-bonds and hydrogenated 1,4-bonds to the total area of all the peaks related to double bonds in the conjugated diene monomer unit (1,2-bonds, 3,4-bonds, and 1,4-bonds) in the obtained peaks.

(MFR of block copolymer)

The MFR of the block copolymer was measured according to JIS K7210 under conditions of a temperature of 230°C and a load of 2.16 kg.

{Production of composition}

(Component (I))

<Preparation of hydrogenation catalyst>

A hydrogenation catalyst used for preparing a block copolymer in Examples and Comparative Examples described below was prepared according to the following method. A reaction container equipped with a stirring apparatus was purged with nitrogen in advance and charged with 1 L of dried and purified cyclohexane. Next, 100 mmol of bis(η5-cyclopentadienyl)titanium dichloride was added thereto. While the contents were thoroughly stirred, a n-hexane solution containing 200 mmol of trimethylaluminum was added thereto. The mixture was reacted at room temperature for approximately 3 days to obtain a hydrogenation catalyst.

<Production of block copolymers (1-1) to (I-26)>

The polymerization conditions, structure, and characteristics of the block copolymers are shown in Table 1 to Table 3.

<Block copolymer (I-1)>

A vessel-type reactor having an internal capacity: 100 L equipped with a stirring apparatus and a jacket was washed, dried, and purged with nitrogen, and batch polymerization was performed as follows to produce a block copolymer (1-1).

As a first step, the reactor was charged with a cyclohexane solution containing 38 L of cyclohexane and 20.0 parts by mass of a styrene monomer, and then, 0.58 mol of N,N,N',N'-tetramethylethylenediamine (hereinafter, also referred to as "TMEDA") was added thereto per 1 mol of n-butyl lithium (hereinafter, also referred to as "Bu-Li").

As a second step, after the temperature was adjusted to 40°C, 0.090 parts by mass of Bu-Li were added based on 100 parts by mass of the total monomers, and polymerization was performed at a temperature inside the reactor of 60°C for 30 minutes.

As a third step, a cyclohexane solution containing 80.0 parts by mass of a conjugated diene monomer (butadiene monomer) was introduced thereto, and thereafter, polymerization was performed for 60 minutes while the reaction temperature was adjusted to 80°C.

As a fourth step, tetramethoxysilane (hereinafter, also referred to as "TMS") was added such that the molar ratio of Si to Li (Si/Li) was 0.30 mol. After stirring for 20 minutes, 0.1 mol of methanol was added per 1 mol of Bu-Li to obtain a styrene-butadiene coupled polymer.

As a fifth step, the hydrogenation catalyst prepared as described above was used to continuously hydrogenate the coupled polymer obtained at 95°C. The amount of the hydrogenation catalyst was 100 ppm, the hydrogen pressure in the hydrogenation polymerization reactor was 0.95 MPa, and the average residence time was 90 minutes. After the reaction was completed, 0.25 parts by mass of an antioxidant (octadecyl-3-(3,5-dibutyl-t-butyl-4-hydroxyphenyl)propionate) was added thereto per 100 parts by mass of the block copolymer to obtain Block Copolymer (1-1).

Characteristics of the obtained block copolymer (I-1) are shown in Table 1.

<Block copolymers (I-2, 3, 4, 16, 19, and 20)>

Block Copolymers (I-2, 3, 4, 16, 19, and 20) were obtained in the same manner as Block Copolymer (I-1) except that the amount of TMEDA added was adjusted as shown in the following Table 1 to Table 3 in the first step and the amount of Bu-Li added as shown in the following Table 1 to Table 3 in the second step.

<Block copolymers (I-5, 6, and 21)>

Block Copolymers (I-5, 6, and 21) were obtained in the same manner as Block Copolymer (I-1) except that the amount of the styrene monomer added was adjusted as shown in the following Table 1 to Table 3 in the first step and the amount of the butadiene monomer added as shown in the following Table 1 to Table 3 in the third step.

<Block copolymers (I-7, 8, 9, 10, 22, 23, and 24)>

Block Copolymers (I-7, 8, 9, 10, 22, 23, and 24) were obtained in the same manner as Block Copolymer (I-1) except that the amount of TMEDA added was adjusted as shown in the following Table 1 to Table 3 in the first step.

<Block copolymers (I-11, 12, 13, 14, 25, and 26)>

Block Copolymers (I-11, 12, 13, 14, 25, and 26) were obtained in the same manner as Block Copolymer (I-1) except that the average residence time in the hydrogenation reaction was adjusted as shown in the following Table 1 to Table 3 in the fifth step.

For Block Copolymer (I-25), the reaction of the fifth step was not performed.

<Block copolymers (I-15, 17, 18)>

Block Copolymers (I-15, 17, 18) were obtained in the same manner as Block Copolymer (I-1) except that the amount of TMS added was adjusted as shown in the following Table 1 and Table 2 in the fourth step.

<Block copolymer (I-16)>

A vessel-type reactor having an internal capacity of 100 L equipped with a stirring apparatus and a jacket was washed, dried, and purged with nitrogen, and batch polymerization was performed as follows to produce Block Copolymer (I-16).

As a first step, the reactor was charged with a cyclohexane solution containing 38 L of cyclohexane and 10.0 parts by mass of a styrene monomer, and then, 0.62 mol of N,N,N',N'-tetramethylethylenediamine (hereinafter, also referred to as "TMEDA") was added thereto per 1 mol of n-butyl lithium (hereinafter, also referred to as "Bu-Li").

As a second step, after the temperature was adjusted to 40°C, 0.021 parts by mass of Bu-Li were added based on 100 parts by mass of the total monomers, and polymerization was performed at a temperature inside the reactor of 60°C for 30 minutes.

As a third step, a cyclohexane solution containing 80.0 parts by mass of a conjugated diene monomer (butadiene monomer) was introduced thereto, and thereafter, polymerization was performed for 80 minutes while the reaction temperature was adjusted to 80°C.

As a fourth step, a cyclohexane solution containing 10.0 parts by mass of a styrene monomer was introduced thereto, and after polymerizing at a temperature inside the reactor of 80°C for 30 minutes, 0.1 mol of methanol was added per 1 mol of Bu-Li to obtain a styrene-butadiene-styrene polymer.

As a fifth step, the hydrogenation catalyst prepared as described above was used to continuously hydrogenate the obtained polymer obtained at 95°C. The amount of the hydrogenation catalyst was 100 ppm, the hydrogen pressure in the hydrogenation polymerization reactor was 0.95 MPa, and the average residence time was 90 minutes. After the reaction was completed, 0.25 parts by mass of an antioxidant (octadecyl-3-(3,5-dibutyl-t-butyl-4-hydroxyphenyl)propionate) was added thereto per 100 parts by mass of the block copolymer to obtain Block Copolymer (I-16). Characteristics of the obtained block copolymer (I-16) are shown in the following Table 2

(Component (II))

(II-1): Engage (registered trademark) XLT8677 manufactured by the Dow Chemical Company (ethylene block copolymer comprising polymer block composed of ethylene and ethylene/1-octene copolymer block)

Crystalline melting peak temperature: 119°C

Heat of fusion: 37 J/g

Glass transition temperature (DSC): -67°C

MFR (ASTM D1238): 0.5 g/10 min

(Measurement condition: 190°C, load 21.18 N (2.16 kgf)) (catalog value)

Density (ISO 1183-Method A): 0.872 g/ cm$^3$ (measurement temperature: 23°C)

(Component (III))

(III-1): Propylene block copolymer (prepared by the polymerization of a propylene homopolymer in the first step, followed by the polymerization of an ethylene/propylene copolymer in the second step)

MFR (ISO 1133): 65 g/10 min (measurement condition: 230°C, load 21.18 N (2.16 kgf))

Content of propylene polymer component: 92 mass%

Content of ethylene/propylene copolymer component: 8 mass%

Content of ethylene unit in ethylene/propylene copolymer component: 43 mass%

(III-2): Hifax X (registered trademark) 1956A manufactured by LyondellBasell Industries N.V.

(prepared by the polymerization of a propylene homopolymer in the first step, followed by the polymerization of an ethylene/propylene copolymer in the second step)

MFR (ISO 1133): 1.1 g/10 min (measurement condition: 230°C, load 21.18 N (2.16 kgf))

Content of propylene polymer component: 70 mass%

Content of ethylene/propylene copolymer component: 30 mass%

Content of ethylene unit in ethylene/propylene copolymer component: 65 mass%

{Method of kneading composition}

A composition was prepared by mixing the components by the materials and methods described below according to the formulation shown in the following Table 4 to Table 6.
0.2 parts by mass of an antioxidant (including 0.1 part by mass of Irganox (registered trademark) 1010, tradename, manufactured by BASF Japan and 0.1 part by mass of Irgafos (registered trademark) 168, tradename, manufactured by BASF Japan), 0.2 parts by mass of a weathering agent (Tinuvin (registered trademark) XT855FF, tradename, manufactured by BASF Japan), and 1.5 parts by mass of a colorant (black pigment, carbon concentration 40 mass%) were blended, based on 100 parts by mass of the total of component (I), the component (II), and the component (III), in a Henschel mixer for 1 minute. Then the mixture was fed to a co-rotating twin screw extruder ("TEX30α", L/D = 45) at a rate of 20 kg/hour, heated to a range of 180 to 210°C, and melt-kneaded to give pellets of the composition.
Subsequently, an ISO dumbbell test specimen for physical properties testing (length 80 mm, width about 10 mm, thickness about 4 mm) was obtained by injection molding (cylinder temperature: 210°C, mold temperature: 40°C).

{Method for evaluating composition}

(Elongation at break)

The injection-molded specimen prepared in the above {Method of kneading composition} was subjected to a tensile test using a tensile tester (TG-5kN manufactured by Minebea Co., Ltd.) according to JIS K 6251 under conditions of 23°C and a crosshead speed of 500 mm/ minute to measure elongation at break, and the specimen was evaluated according to the following criteria.

O: The elongation at break is 600% or more.

△: The elongation at break is 300% or more and less than 600%.

×: The elongation at break is less than 300%.

(Rigidity)

The ISO dumbbell test specimen, prepared in the above {Method of kneading composition}, was machined at both ends to produce a rectangular specimen with a gauge section of approximately 80 mm in length, 10 mm in width, and 4 mm in thickness. The flexural modulus was calculated using the secant method from the strain - stress curve obtained in a three-point bending test and evaluated according to the following criteria.

O: The flexural rigidity is 300 MPa or more.

△: The flexural rigidity is 250 MPa or more and less than 300 MPa.

×: The flexural rigidity is less than 250 MPa.

(Impact resistance at low temperatures (-45°C, -75°C))

Notched Charpy impact strength was measured according to JIS K 7111-1 and evaluated according to the following criteria.

The injection-molded ISO dumbbell specimen, prepared in the above {Method of kneading composition}, was machined at both ends to produce a rectangular specimen with a gauge section of approximately 80 mm in length, 10 mm in width, and 4 mm in thickness. The notch type was set to Type A, and the impact direction was set to edgewise.

The measurement temperature was -45°C and -70°C. The unit is kJ/ $m^2$.

<-45°C>

○: The impact strength is 8 kJ/ $m^2$ or more.

△: The impact strength is 3 kJ/$m^2$ or more and less than 8 kJ/ $m^2$.

×: The impact strength is less than 3 kJ/$m^2$.

<-70°C>

◎: The impact strength is 5 kJ/ $m^2$ or more.

O: The impact strength is 3 kJ/ $m^2$ or more and less than 5 kJ/ $m^2$.

△: The impact strength is 1 kJ/ $m^2$ or more and less than 3 kJ/ $m^2$.

×: The impact strength is less than 1 kJ/ $m^2$.

(Low gloss)

Using the composition prepared in the above {Method of kneading composition}, a mirror-finished molded plate was prepared by injection molding (cylinder temperature 210°C, mold temperature 40°C). The gloss value was measured at an incident angle of 60° according to ISO 7668 and evaluated according to the following criteria.

O: The gloss value is less than 20.

△: The gloss value is 20 or more and less than 40.

×: The gloss value is 40 or more.

(Shrinking properties after heating)

The injection-molded specimen prepared in the above {Method of kneading composition} was heat-aged at 110°C for 1,000 hours. The dimensional change in the machine direction (MD) before and after heating was then measured and evaluated according to the following criteria.

O: The shrinkage ratio was less than 0.5%.

△: The shrinkage ratio was 0.5% or more and less than 2.0%.

×: The shrinkage ratio was 2.0% or more.

(Surface appearance)

The injection-molded specimen prepared in the above {Method of kneading composition} was visually inspected for the presence of flow marks and uneven gloss, and the surface appearance was evaluated according to the following criteria.

Five evaluators visually assessed the surface appearance of the injection-molded specimen with consistent results.

O: No flow marks or uneven gloss detected on the specimen.

△: Slight flow marks and uneven gloss detected on the specimen.

×: Pronounced flow marks and uneven gloss detected on the specimen.

(VOC (residual cyclohexane))

The residual cyclohexane in the block copolymer prepared above was dissolved in chloroform at 5 g/ 50 mL using the block copolymer as the measurement sample, and methanol was added to precipitate the block copolymer. The solution was measured using gas chromatography (GC7820A/7890A manufactured by Agilent Technologies Japan, Ltd.), and VOC was evaluated according to the following criteria.

O: The amount of cyclohexane is less than 500 ppm.

△:The amount of cyclohexane is 500 ppm or more and less than 1,500 ppm.

×:The amount of cyclohexane is 1,500 ppm or more.

The method for producing the block copolymers (Production Examples 1 to 18, Comparative Production Examples 19 to 26) and physical properties are shown in the following Table 1 to Table 3. The formulation and characteristics of the compositions prepared using each of the block copolymers are shown in the following Table 4 to Table 6.

[Table 1]

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| | I-1 | I-2 | I-3 | I-4 | I-5 | I-6 | I-7 | I-8 | I-9 |
| Amount of styrene monomer in 1st step (parts by mass) | 20 | 20 | 20 | 20 | 5 | 35 | 20 | 20 | 20 |
| Amount of TMEDA in 1st step (mol) | 0.58 | 0.55 | 0.63 | 0.51 | 0.58 | 0.58 | 0.51 | 0.55 | 0.61 |
| Amount of Bu-Li added in 2nd step (parts by mass) | 0.090 | 0.125 | 0.072 | 0.140 | 0.090 | 0.090 | 0.090 | 0.090 | 0.090 |
| Amount of butadiene monomer in 3rd step (parts by mass) | 80 | 80 | 80 | 80 | 95 | 65 | 80 | 80 | 80 |
| Amount of TMS added in 4th step (Si/Li) | 0.30 | 0.30 | 0.30 | 0.30 | 0.30 | 0.30 | 0.30 | 0.30 | 0.30 |
| Average residence time in 5th step (minutes) | 90 | 90 | 90 | 90 | 90 | 90 | 90 | 90 | 90 |
| Structure of block copolymer | (A-B)n-X | (A-B)n-X | (A-B)n-X | (A-B)n-X | (A-B)n-X | (A-B)n-X | (A-B)n-X | (A-B)n-X | (A-B)n-X |
| Content of vinyl aromatic monomer unit (mass%) | 20 | 20 | 20 | 20 | 5 | 35 | 20 | 20 | 20 |
| Content of polymer block A (mass%) | 20 | 20 | 20 | 20 | 5 | 35 | 20 | 20 | 20 |
| Content of conjugated diene monomer unit (mass%) | 80 | 80 | 80 | 80 | 95 | 65 | 80 | 80 | 80 |
| Vinyl bond content in conjugated diene monomer unit (mol%) | 45 | 45 | 45 | 45 | 45 | 45 | 35 | 40 | 50 |
| Degree of hydrogenation in conjugated diene monomer unit (mol%) | 70 | 70 | 70 | 70 | 70 | 70 | 70 | 70 | 70 |
| Coupling ratio (mass%) | 85 | 85 | 85 | 85 | 85 | 85 | 85 | 85 | 85 |
| Peak top molecular weight of diblock component before coupling reaction (ten thousand) | 15.6 | 9.7 | 21.4 | 5.1 | 15.8 | 16.2 | 15.1 | 15.3 | 15.2 |
| Weight average molecular weight of block copolymer (ten thousand) | 40.1 | 25.1 | 55.5 | 14.2 | 39.8 | 41.1 | 40.4 | 40.6 | 40.4 |

EP 4 674 878 A1

(continued)

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| | I-1 | I-2 | I-3 | I-4 | I-5 | I-6 | I-7 | I-8 | I-9 |
| MFR(ISO 1133, 230°C, 2.16Kg) (g/10 min) | No flow | No flow | No flow | 0.5 | No flow | No flow | No flow | No flow | No flow |
| Form | Crumb | Crumb | Crumb | Flake | Crumb | Crumb | Crumb | Crumb | Crumb |

[Table 2]

| | Production Example 10 | Production Example 11 | Production Example 12 | Production Example 13 | Production Example 14 | Production Example 15 | Production Example 16 | Production Example 17 | Production Example 18 |
|---|---|---|---|---|---|---|---|---|---|
| | I-10 | I-11 | I-12 | I-13 | I-14 | I-15 | I-16 | I-17 | I-18 |
| Amount of styrene monomer in 1st step (parts by mass) | 20 | 20 | 20 | 20 | 20 | 20 | 10 | 20 | 20 |
| Amount of TMEDA in 1st step (mol) | 0.65 | 0.58 | 0.58 | 0.58 | 0.58 | 0.58 | 0.62 | 0.58 | 0.58 |
| Amount of Bu-Li added in 2nd step (parts by mass) | 0.090 | 0.090 | 0.090 | 0.090 | 0.090 | 0.090 | 0.021 | 0.090 | 0.090 |
| Amount of butadiene monomer in 3rd step (parts by mass) | 80 | 80 | 80 | 80 | 80 | 80 | 80 | 80 | 80 |
| Amount of TMS added in 4th step (Si/Li) | 0.30 | 0.30 | 0.30 | 0.30 | 0.30 | 0.26 | - | 0.28 | 0.32 |
| Average residence time in 5th step (minutes) | 90 | 40 | 70 | 100 | 130 | 90 | 90 | 90 | 90 |
| Structure of block copolymer | (A-B)n-X | (A-B)n-X | (A-B)n-X | (A-B)n-X | (A-B)n-X | (A-B)n-X | A-B-A | (A-B)n-X | (A-B)n-X |
| Content of vinyl aromatic monomer unit (mass%) | 20 | 20 | 20 | 20 | 20 | 20 | 20 | 20 | 20 |
| Content of polymer block A (mass%) | 20 | 20 | 20 | 20 | 20 | 20 | 20 | 20 | 20 |
| Content of conjugated diene monomer unit (mass%) | 80 | 80 | 80 | 80 | 80 | 80 | 80 | 80 | 80 |
| Vinyl bond content in conjugated diene monomer unit (mol%) | 55 | 45 | 45 | 45 | 45 | 45 | 45 | 45 | 45 |
| Degree of hydrogenation in conjugated diene monomer unit (mol%) | 70 | 30 | 50 | 75 | 85 | 70 | 70 | 70 | 70 |
| Coupling ratio (mass%) | 85 | 85 | 85 | 85 | 85 | 70 | - | 80 | 90 |
| Peak top molecular weight of diblock component before coupling reaction (ten thousand) | 15.5 | 15.9 | 15.8 | 15.6 | 15.9 | 16.1 | - | 15.6 | 15.6 |
| Weight average molecular weight of block copolymer (ten thousand) | 40.5 | 40.8 | 39.1 | 41.2 | 40.2 | 40.3 | 40.9 | 39.6 | 41.1 |

(continued)

| | Production Example 10 | Production Example 11 | Production Example 12 | Production Example 13 | Production Example 14 | Production Example 15 | Production Example 16 | Production Example 17 | Production Example 18 |
|---|---|---|---|---|---|---|---|---|---|
| | I-10 | I-11 | I-12 | I-13 | I-14 | I-15 | I-16 | I-17 | I-18 |
| MFR(ISO 1133, 230°C, 2.16Kg) (g/10 min) | No flow | No flow | No flow | No flow | No flow | No flow | No flow | No flow | No flow |
| Form | Crumb | Crumb | Crumb | Crumb | Crumb | Crumb | Crumb | Crumb | Crumb |

[Table 3]

| | Comparative Production Example 19 | Comparative Production Example 20 | Comparative Production Example 21 | Comparative Production Example 22 | Comparative Production Example 23 | Comparative Production Example 24 | Comparative Production Example 25 | Comparative Production Example 26 |
|---|---|---|---|---|---|---|---|---|
| | I-19 | I-20 | I-21 | I-22 | I-23 | I-24 | I-25 | I-26 |
| Amount of styrene monomer in 1st step (parts by mass) | 20 | 20 | 42 | 20 | 20 | 20 | 20 | 20 |
| Amount of TMEDA in 1st step (mol) | 0.48 | 0.45 | 0.55 | 0.4 | 0.44 | 0.71 | 0.6 | 0.55 |
| Amount of Bu-Li added in 2nd step (parts by mass) | 0.151 | 0.160 | 0.090 | 0.090 | 0.090 | 0.090 | 0.090 | 0.090 |
| Amount of butadiene monomer in 3rd step (parts by mass) | 80 | 80 | 58 | 80 | 80 | 80 | 80 | 80 |
| Amount of TMS added in 4th step (Si/Li) | 0.30 | 0.30 | 0.30 | 0.30 | 0.30 | 0.30 | 0.30 | 0.30 |
| Average residence time in 5th step (minutes) | 90 | 90 | 90 | 90 | 90 | 90 | None | 150 |
| Structure of block copolymer | (A-B)n-X | (A-B)n-X | (A-B)n-X | (A-B)n-X | (A-B)n-X | (A-B)n-X | (A-B)n-X | (A-B)n-X |
| Content of vinyl aromatic monomer unit (mass%) | 20 | 20 | 42 | 20 | 20 | 20 | 20 | 20 |
| Content of polymer block A (mass%) | 20 | 20 | 42 | 20 | 20 | 20 | 20 | 20 |
| Content of conjugated diene monomer unit (mass%) | 80 | 80 | 58 | 80 | 80 | 80 | 80 | 80 |
| Vinyl bond content in conjugated diene monomer unit (mol%) | 45 | 45 | 45 | 25 | 32 | 60 | 45 | 45 |
| Degree of hydrogenation in conjugated diene monomer unit (mol%) | 70 | 70 | 70 | 70 | 70 | 70 | 0 | 100 |
| Coupling ratio (mass%) | 85 | 85 | 85 | 85 | 85 | 85 | 85 | 85 |

EP 4 674 878 A1

| | Comparative Production Example 19 | Comparative Production Example 20 | Comparative Production Example 21 | Comparative Production Example 22 | Comparative Production Example 23 | Comparative Production Example 24 | Comparative Production Example 25 | Comparative Production Example 26 |
|---|---|---|---|---|---|---|---|---|
| | I-19 | I-20 | I-21 | I-22 | I-23 | I-24 | I-25 | I-26 |
| Peak top molecular weight of diblock component before coupling reaction (ten thousand) | 4.2 | 3.3 | 15.5 | 15.0 | 15.6 | 15.5 | 15.8 | 15.7 |
| Weight average molecular weight of block copolymer (ten thousand) | 10.0 | 5.0 | 40.2 | 40.1 | 39.8 | 40.9 | 40.5 | 40.4 |
| MFR(ISO 1133, 230°C, 2.16Kg) (g/10 min) | 7 | 15 | No flow | No flow | No flow | No flow | No flow | No flow |
| Form | Pellet | Pellet | Crumb | Crumb | Crumb | Crumb | Crumb | Crumb |

EP 4 674 878 A1

[Table 4]

| (Parts by mass) | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| (I): Block copolymer | I-1 | 25 | | | | | | | | | |
| | I-2 | | 25 | | | | | | | | |
| | I-3 | | | 25 | | | | | | | |
| | I-4 | | | | 25 | | | | | | |
| | I-5 | | | | | 25 | | | | | |
| | I-6 | | | | | | 25 | | | | |
| | I-7 | | | | | | | 25 | | | |
| | I-8 | | | | | | | | 25 | | |
| | I-9 | | | | | | | | | 25 | |
| | I-10 | | | | | | | | | | 25 |
| | I-11 | | | | | | | | | | |
| | I-12 | | | | | | | | | | |
| | I-13 | | | | | | | | | | |
| | I-14 | | | | | | | | | | |
| | I-15 | | | | | | | | | | |
| | I-16 | | | | | | | | | | |
| | I-17 | | | | | | | | | | |
| | I-18 | | | | | | | | | | |
| | I-19 | | | | | | | | | | |
| | I-20 | | | | | | | | | | |
| | I-21 | | | | | | | | | | |
| | I-22 | | | | | | | | | | |
| | I-23 | | | | | | | | | | |
| | I-24 | | | | | | | | | | |
| | I-25 | | | | | | | | | | |

| (Parts by mass) | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | I-26 | | | | | | | | | | |
| (II): Ethylene copolymer | II-1 | 44 | 44 | 44 | 44 | 44 | 44 | 44 | 44 | 44 | 44 |
| (III): Propylene copolymer | III-1 | 75 | 75 | 75 | 75 | 75 | 75 | 75 | 75 | 75 | 75 |
| | III-2 | 25 | 25 | 25 | 25 | 25 | 25 | 25 | 25 | 25 | 25 |
| Physical properties | Elongation at break | ○ | ○ | ○ | ○ | ○ | △ | ○ | ○ | ○ | ○ |
| | Rigidity | ○ | ○ | ○ | ○ | △ | ○ | ○ | ○ | ○ | ○ |
| | Impact resistance (-45°C) | ○ | ○ | ○ | ○ | ○ | ○ | △ | ○ | ○ | △ |
| | Impact resistance (-70°C) | O | ○ | ◎ | ○ | ◎ | ◎ | △ | ◎ | ◎ | △ |
| | Low gloss | ○ | ○ | ○ | △ | ○ | ○ | ○ | ○ | ○ | ○ |
| | Shrinking properties after heating | ○ | ○ | ○ | △ | ○ | ○ | ○ | ○ | ○ | ○ |
| | Surface appearance | ○ | ○ | ○ | ○ | ○ | ○ | ○ | ○ | ○ | ○ |
| | Low VOC (residual cyclohexane) | ○ | ○ | ○ | △ | ○ | ○ | ○ | ○ | ○ | ○ |

[Table 5]

| (Parts by mass) | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| (I): Block copolymer | I-1 | | | | | | | | | | | |
| | I-2 | | | | | | | | | 8 | 17 | 42 |
| | I-3 | | | | | | | | | | | |
| | I-4 | | | | | | | | | | | |
| | I-5 | | | | | | | | | | | |
| | I-6 | | | | | | | | | | | |
| | I-7 | | | | | | | | | | | |
| | I-8 | | | | | | | | | | | |
| | I-9 | | | | | | | | | | | |
| | I-10 | | | | | | | | | | | |
| | I-11 | 25 | | | | | | | | | | |
| | I-12 | | 25 | | | | | | | | | |
| | I-13 | | | 25 | | | | | | | | |
| | I-14 | | | | 25 | | | | | | | |
| | I-15 | | | | | 25 | | | | | | |
| | I-16 | | | | | | 25 | | | | | |
| | I-17 | | | | | | | 25 | | | | |
| | I-18 | | | | | | | | 25 | | | |
| | I-19 | | | | | | | | | | | |
| | I-20 | | | | | | | | | | | |
| | I-21 | | | | | | | | | | | |
| | I-22 | | | | | | | | | | | |
| | I-23 | | | | | | | | | | | |
| | I-24 | | | | | | | | | | | |
| | I-25 | | | | | | | | | | | |

EP 4 674 878 A1

(continued)

| (Parts by mass) | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| | I-26 | | | | | | | | | | | |
| (II): Ethylene copolymer | II-1 | 44 | 44 | 44 | 44 | 44 | 44 | 44 | 44 | 61 | 53 | 27 |
| (III): Propylene copolymer | III-1 | 75 | 75 | 75 | 75 | 75 | 75 | 75 | 75 | 75 | 75 | 75 |
| | III-2 | 25 | 25 | 25 | 25 | 25 | 25 | 25 | 25 | 25 | 25 | 25 |
| Physical properties | Elongation at break | ○ | ○ | ○ | ○ | ○ | ○ | ○ | ○ | ○ | ○ | ○ |
| | Rigidity | ○ | ○ | ○ | ○ | ○ | ○ | ○ | ○ | ○ | ○ | ○ |
| | Impact resistance (-45°C) | ○ | ○ | ○ | △ | ○ | ○ | ○ | ○ | △ | ○ | ○ |
| | Impact resistance (-70°C) | ◎ | ◎ | ◎ | △ | ◎ | ◎ | ◎ | ◎ | △ | ○ | ○ |
| | Low gloss | ○ | ○ | ○ | ○ | ○ | ○ | ○ | ○ | △ | ○ | O |
| | Shrinking properties after heating | ○ | ○ | ○ | ○ | ○ | ○ | ○ | ○ | ○ | ○ | △ |
| | Surface appearance | ○ | ○ | ○ | ○ | △ | △ | ○ | ○ | ○ | ○ | △ |
| | Low VOC (residual cyclohexane) | ○ | ○ | ○ | ○ | ○ | ○ | ○ | ○ | ○ | ○ | ○ |

[Table 6]

EP 4 674 878 A1

| (Parts by mass) | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| (I): Block copolymer | I-1 | | | | | | | | | | |
| | I-2 | | | | | | | | | | 69 |
| | I-3 | | | | | | | | | | |
| | I-4 | | | | | | | | | | |
| | I-5 | | | | | | | | | | |
| | I-6 | | | | | | | | | | |
| | I-7 | | | | | | | | | | |
| | I-8 | | | | | | | | | | |
| | I-9 | | | | | | | | | | |
| | I-10 | | | | | | | | | | |
| | I-11 | | | | | | | | | | |
| | I-12 | | | | | | | | | | |
| | I-13 | | | | | | | | | | |
| | I-14 | | | | | | | | | | |
| | I-15 | | | | | | | | | | |
| | I-16 | | | | | | | | | | |
| | I-17 | | | | | | | | | | |
| | I-18 | | | | | | | | | | |
| | I-19 | | 25 | | | | | | | | |
| | I-20 | | | 25 | | | | | | | |
| | I-21 | | | | 25 | | | | | | |
| | I-22 | | | | | 25 | | | | | |
| | I-23 | | | | | | 25 | | | | |
| | I-24 | | | | | | | 25 | | | |
| | I-25 | | | | | | | | 25 | | |

(continued)

| (Parts by mass) | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| | I-26 | | | | | | | | | 25 | |
| (II): Ethylene copolymer | II-1 | 69 | 44 | 44 | 44 | 44 | 44 | 44 | 44 | 44 | |
| (III): Propylene copolymer | III-1 | 75 | 75 | 75 | 75 | 75 | 75 | 75 | 75 | 75 | 75 |
| | III-2 | 25 | 25 | 25 | 25 | 25 | 25 | 25 | 25 | 25 | 25 |
| Physical properties | Elongation at break | × | ○ | ○ | × | ○ | ○ | ○ | × | ○ | ○ |
| | Rigidity | △ | ○ | ○ | ○ | ○ | ○ | × | ○ | ○ | × |
| | Impact resistance (-45°C) | × | ○ | ○ | ○ | × | × | × | ○ | × | ○ |
| | Impact resistance (-70°C) | × | × | × | ○ | × | × | × | ○ | × | ○ |
| | Low gloss | × | × | × | ○ | ○ | ○ | ○ | ○ | ○ | ○ |
| | Shrinking properties after heating | ○ | × | × | ○ | ○ | ○ | ○ | ○ | ○ | × |
| | Surface appearance | △ | ○ | ○ | ○ | ○ | ○ | ○ | ○ | ○ | × |
| | Low VOC (residual cyclohexane) | ○ | × | × | ○ | ○ | ○ | ○ | ○ | ○ | ○ |

33

Table 4 to Table 6 show that in Examples 1 to 21, the impact resistance at extremely low temperatures, elongation at break, rigidity, low gloss, and balance in characteristics were rated as ○ or △, without ×, demonstrating excellent performance.

Table 4 to Table 6 show that in Comparative Examples 1 to 10, at least one of the impact resistance at extremely low temperatures, elongation at break, rigidity, low gloss, and balance in characteristics was rated as ×, demonstrating poor performance.

This application is based on Japanese Patent Application No. 2023-031542, filed on March 2, 2023, with the Japan Patent Office, the contents of which are incorporated herein by reference.

**Industrial Applicability**

The block copolymer of the present invention and its composition exhibit excellent impact resistance at extremely low temperatures, elongation at break, rigidity, low gloss, and balance in characteristics, and are industrially applicable as materials for automotive interior parts, such as airbag covers, instrument panels, center panels, center console boxes, door trim, pillars, assist grips, and handles, automotive exterior parts, such as mud guards and grommets, and home appliance components, building materials, and furniture. The block copolymer and the composition are particularly suitable as a material for airbag covers in airbag systems that activate and deploy to protect occupants upon detecting impact or deformation during collisions or similar accidents in high-speed vehicles such as automobiles.

**Claims**

1. A block copolymer (I) comprising: a polymer block A comprising a vinyl aromatic monomer unit as a main component and a polymer block B comprising a conjugated diene monomer unit as a main component, wherein

   a content of the polymer block A is 3 to 40 mass%,
   a vinyl bond content of the polymer block B before hydrogenation is 35 to 55 mol%,
   a degree of hydrogenation of the conjugated diene monomer unit contained in the polymer block B is 30 to 90 mol%, and
   the block copolymer (I) has a weight average molecular weight of 150,000 to 600,000.

2. The block copolymer (I) according to claim 1, wherein the degree of hydrogenation of the conjugated diene monomer unit contained in the polymer block B is 30 to 77 mol%.

3. The block copolymer (I) according to claim 1, wherein the block copolymer (I) has a melt flow rate of less than 0.1 g/10 min as measured under conditions of a measurement temperature of 230°C and a measurement load of 2.16 kg in accordance with ISO 1133.

4. The block copolymer (I) according to claim 1, wherein the block copolymer (I) is a hydrogenated product of a coupled polymer represented by the following formula (1) and having a coupling ratio of 80% or more:

$$(A\text{-}B)_n\text{-}X \qquad (1)$$

   wherein A is a polymer block A comprising a vinyl aromatic monomer unit as a main component, B is a polymer block B comprising a conjugated diene monomer unit as a main component, n is an integer of 1 or more, and X is a residue of a coupling agent or a residue of a polymerization initiator.

5. The block copolymer (I) according to claim 1, wherein the block copolymer (I) is selected from the group consisting of crumb, flake and powder.

6. A composition for an airbag cover comprising:

   a component (I): the block copolymer (I) according to any one of claims 1 to 5 in an amount of 1 to 58 parts by mass,
   a component (II): an ethylene copolymer in an amount of 11 to 68 parts by mass, and
   a component (III): a propylene copolymer in an amount of 100 parts by mass.

7. An airbag cover comprising the composition according to claim 6.

## INTERNATIONAL SEARCH REPORT

| International application No. |
|---|
| **PCT/JP2024/004029** |

| A. | CLASSIFICATION OF SUBJECT MATTER |
|---|---|

*C08F 293/00*(2006.01)i; *C08F 8/04*(2006.01)i; *C08L 23/08*(2006.01)i; *C08L 23/10*(2006.01)i; *C08L 53/02*(2006.01)i
FI: C08F293/00; C08F8/04; C08L53/02; C08L23/08; C08L23/10

According to International Patent Classification (IPC) or to both national classification and IPC

| B. | FIELDS SEARCHED |
|---|---|

Minimum documentation searched (classification system followed by classification symbols)

C08F293/00; C08F8/04; C08L23/08; C08L23/10; C08L53/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-017562 A (ASAHI KASEI KABUSHIKI KAISHA) 15 February 2021 (2021-02-15) claims, paragraphs [0042], [0052], [0057], [0059], examples | 1-2, 4-7 |
| A | | 3 |
| X | WO 2015/111674 A1 (ASAHI KASEI CHEMICALS CORPORATION) 30 July 2015 (2015-07-30) claims, examples | 1-2, 4-5 |
| A | | 3, 6-7 |
| X | JP 2018-184589 A (ASAHI KASEI KABUSHIKI KAISHA) 22 November 2018 (2018-11-22) claims, paragraphs [0020], [0023], [0030], [0075], examples | 1, 2, 4-7 |
| A | | 3 |
| X | WO 2018/139122 A1 (ASAHI KASEI KABUSHIKI KAISHA) 02 August 2018 (2018-08-02) claims, paragraph [0021], examples | 1-2, 4-5 |
| A | | 3, 6-7 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 April 2024** | **23 April 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

| International application No. |
| --- |
| **PCT/JP2024/004029** |

### C.     DOCUMENTS CONSIDERED TO BE RELEVANT

| Category* | Citation of document, with indication, where appropriate, of the relevant passages | Relevant to claim No. |
| --- | --- | --- |
| P, X | WO 2023/223766 A1 (ASAHI KASEI KABUSHIKI KAISHA) 23 November 2023 (2023-11-23)<br>claims, examples | 1, 2, 4-7 |
| P, A | | 3 |

Form PCT/ISA/210 (second sheet) (July 2022)

**INTERNATIONAL SEARCH REPORT**
Information on patent family members

International application No.

**PCT/JP2024/004029**

| Patent document cited in search report | | | Publication date (day/month/year) | Patent family member(s) | | | Publication date (day/month/year) |
|---|---|---|---|---|---|---|---|
| JP | 2021-017562 | A | 15 February 2021 | US | 2021/0017318 | A1 | |
| | | | | claims, paragraphs [0156], [0193]-[0201], [0236], [0242], examples | | | |
| | | | | EP | 3766905 | A1 | |
| | | | | CN | 112239511 | A | |
| | | | | TW | 202110921 | A | |
| WO | 2015/111674 | A1 | 30 July 2015 | US | 2019/0153273 | A1 | |
| | | | | claims, examples | | | |
| | | | | EP | 3098279 | A1 | |
| | | | | CN | 105916955 | A | |
| | | | | KR | 10-2016-0102290 | A | |
| | | | | EA | 201691313 | A | |
| | | | | MX | 2016009673 | A | |
| | | | | SG | 11201605519Q | A | |
| | | | | TW | 201533194 | A | |
| | | | | ES | 2687399 | T | |
| JP | 2018-184589 | A | 22 November 2018 | TW | 201841720 | A | |
| WO | 2018/139122 | A1 | 02 August 2018 | US | 2019/0367724 | A1 | |
| | | | | claims, paragraph [0103], examples | | | |
| | | | | EP | 3575361 | A1 | |
| | | | | CN | 110023403 | A | |
| | | | | KR | 10-2019-0083372 | A | |
| | | | | TW | 201831588 | A | |
| WO | 2023/223766 | A1 | 23 November 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022109650 A
- JP 2007529617 W
- JP 2008537563 W
- JP 2008543978 W
- JP 2023031542 A

### Non-patent literature cited in the description

- **I. M. KOLTHOFF et al.** *J. Polym. Sci.*, 1946, vol. 1, 429
- **Y. TANAKA et al.** *RUBBER CHEMISTRY and TECHNOLOGY*, 1981, vol. 54, 685